# EUROPÄISCHE PATENTANMELDUNG

(11) **EP 3 336 394 A1**
(43) Veröffentlichungstag der Anmeldung: **20.06.2018**
(21) Anmeldenummer: 16205045.4
(22) Anmeldetag: 19.12.2016
(51) Int. Cl.: F16J 15/3288, F01D 11/00

(54) **DICHTUNG AUS KERAMISCHEN FASERVERBUNDWERKSTOFF UND VERFAHREN**

(71) Anmelder: Siemens Aktiengesellschaft, 80333 München (DE)
(72) Erfinder: Peltier, Vincent, 10553 Berlin (DE); Zhou, Kunyuan, 10707 Berlin (DE)

(57) **Zusammenfassung**

Die Erfindung betrifft eine Dichtung (1), insbesondere für Hochtemperaturanwendungen in thermischen Strömungsmaschinen, aus keramischen Faserverbundwerkstoff, wobei die Dichtung (1) einen ersten Abschnitt (2) und einen zweiten Abschnitt (3, 3a, 3b) aufweist, wobei der erste Abschnitt (2) und der zweite Abschnitt (3, 3a, 3b) unterschiedliche mechanische Eigenschaften aufweisen.

## Beschreibung

Die Erfindung betrifft eine Dichtung, insbesondere für Hochtemperaturanwendungen in thermischen Strömungsmaschinen, aus keramischem Faserverbundwerkstoff.

Unter thermischen Strömungsmaschinen (auch Turbomaschinen genannt) werden dabei Maschinen verstanden, bei denen eine Energieübertragung zwischen einem Arbeitsmedium (Flüssigkeit oder Gas) und der thermische Strömungsmaschinen in einem offenen Raum durch eine Strömung nach den Gesetzen der Fluiddynamik über den Umweg der kinetischen Energie erfolgt.

Eine derartige thermische Strömungsmaschine kann ein Verdichter zum Komprimieren von einem gasförmigen Arbeitsmedium sein oder eine Turbine, welche die innere Energie eines strömenden Arbeitsmediums in mechanische Energie umwandelt, die sie über eine Turbinenwelle abgibt.

Effizienzsteigerungen können erreicht werden, indem Kühlbedarf und Leckageströme derartiger thermischer Strömungsmaschinen reduziert werden.

Keramische Faserverbundwerkstoffe (auch als Ceramic Matrix Composites oder als CMC bezeichnet) werden dabei als Hochtemperaturmaterial der nächsten Generation für Turbinenteile, wie z.B. Ringsegmente, Flügel, Übergänge und oder rotierende Flügel thermischer Strömungsmaschinen angesehen, um den Kühlbedarf zu reduzieren. Unter keramischen Faserverbundwerkstoffen wird eine Werkstoffklasse innerhalb der Gruppe der Verbundwerkstoffe oder auch der technischen Keramiken verstanden, die charakterisiert sind durch eine zwischen Langfasern eingebettete Matrix aus normaler Keramik, die durch keramische Fasern verstärkt wird und so zur faserverstärkten Keramik, Verbundkeramik oder auch einfach Faserkeramik wird. Matrix und Fasern können im Prinzip aus allen bekannten keramischen Werkstoffen bestehen, wobei in diesem Zusammenhang auch Kohlenstoff als keramischer Werkstoff angesehen wird.

Herkömmliche Metalldichtungen, wie Metall-Rillendichtungen etc., können für keramische Faserverbundwerkstoffe zu steif sein und Schäden verursachen, wenn große Belastungen aufgrund großer Relativbewegungen auftreten. Dichtungstypen wie Dichtschnüre können nicht hohen Temperaturen und/oder großen Relativbewegungen widerstehen.

Es besteht daher Bedarf an Dichtungen, die sowohl Relativbewegungen zwischen benachbarten Teilen kompensieren als auch hohen Temperaturen widerstehen.

Erfindungsgemäß werden zur Herstellung einer Dichtung, insbesondere für Hochtemperaturanwendungen in thermischen Strömungsmaschinen, aus keramischen Faserverbundwerkstoff, die einen ersten Abschnitt und einen zweiten Abschnitt aufweist, wobei der erste Abschnitt und der zweite Abschnitt unterschiedliche mechanische Eigenschaften aufweisen, wobei erste Abschnitt eine höhere Elastizität als der zweite Abschnitt aufweist, der erste Abschnitt mit einem ersten Druck druckbehandelt und der zweite Abschnitt mit einem zweiten Druck druckbehandelt, der kleiner als der erste Druck ist.

Dabei werden unter Hochtemperaturanwendungen Anwendungen verstanden, bei denen Bauteile Temperaturen oberhalb von 1200°C ausgesetzt sind. Durch Ausbildung von zwei Abschnitten mit unterschiedlichen mechanischen Eigenschaften ist eine abschnittsweise Anpassung der Dichtung an Belastungen aufgrund großer Relativbewegungen und/oder an hohe Temperaturen möglich.

Unter Elastizität wird die Eigenschaft eines Körpers oder Werkstoffes verstanden, unter Krafteinwirkung seine Form zu verändern und bei Wegfall der einwirkenden Kraft in die Ursprungsform zurückzukehren. So ist insbesondere eine Anpassung bei großen Relativbewegungen möglich.

Zur Herstellung der Dichtung aus keramischem Faserverbundwerkstoff werden zuerst Keramikfasern ausgerichtet in einer gewünschten Bauteilform abgelegt und dann ein Matrixmaterial zwischen die Keramikfasern eingebracht. Anschließend wird das Matrixmaterial ausgehärtet. Dabei wird auf den ersten Abschnitt ein erhöhter Druck ausgeübt, während auf den zweiten Abschnitt ein reduzierter Druck ausgeübt wird. Unter einem reduzierten Druck wird dabei auch ein Atmosphärendruck verstanden, d.h. es wird auf den zweiten Abschnitt kein zusätzlicher Druck aufgebracht, der oberhalb des Atmosphärendrucks liegt.

Bevorzugt wird der erste Abschnitt mit einem Verstärkungselement versehen. Das Verstärkungselement kann ein Metallstift sein, der sich durch mehrere Lagen des Keramikfasern streckt, oder eine Klammer, die mehrere Lagen der Keramikfasern zusammenhält.

Bevorzugt wird der erste Abschnitt mit einem Dichtelement versehen. So kann eine Abdichtung zwischen der Dichtung und einer Nut, in die die Dichtung abschnittsweise eingesetzt ist, verbessert werden.

Bevorzugt wird die Dichtung zumindest zwei zweite Abschnitte aufweisend ausgebildet und der erste Abschnitt wird zwischen den beiden zweiten Abschnitten angeordnet. Mit anderen Worten, der eine zweite Abschnitt erstreckt sich ausgehend vom ersten Abschnitt in eine erste Richtung, während sich der andere zweite Abschnitt in ein zweite, zur ersten Richtung entgegengesetzten Richtung erstreckt. So kann die Dichtung zweiseitig angepasst ausgebildet werden.

Bevorzugt wird zwischen Fasern der Dichtung Metallelemente angeordnet. Die Metallelemente können plattenförmig, streifenförmig oder fadenförmig sein und bewirken sowohl eine Verstärkung der Dichtung als auch eine Verbesserung der Wärmeleitfähigkeit der Dichtung, so dass Wärme besser aus der Dichtung abgeführt werden kann, was deren Temperaturbeständigkeit nochmals erhöht.

Bevorzugt wird die Dichtung buchsenförmig ausgebildet. Somit kann die Dichtung einen runden, insbesondere kreisrunden Querschnitt aufweisen und ein entsprechendes Gegenstück aufnehmen.

Ferner gehört zur Erfindung eine derartigen Dichtung und eine thermische Strömungsmaschine mit einer derartigen Dichtung.

Im Folgenden wird eine bevorzugte Ausführungsform des erfindungsgemäßen Verfahrens anhand der beigefügten schematischen Zeichnungen erläutert. Es zeigt:
Fig. 1 eine schematische Darstellung eines ersten Ausführungsbeispiels der Dichtung.
Fig. 2 eine schematische Darstellung eines zweiten Ausführungsbeispiels der Dichtung.
Fig. 3 einen ersten Schritt eines Verfahrens zur Herstellung einer derartigen Dichtung.
Fig. 4 einen zweiten Schritt eines Verfahrens zur Herstellung einer derartigen Dichtung.
Fig. 5 einen dritten Schritt eines Verfahrens zur Herstellung einer derartigen Dichtung.
Fig. 6 einen alternativen dritten Schritt eines Verfahrens zur Herstellung einer derartigen Dichtung.

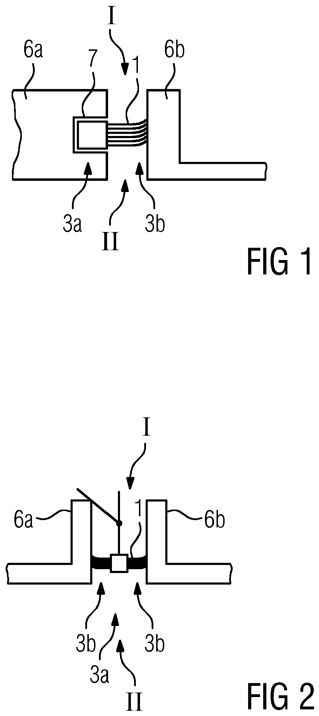

Es wird zunächst auf Fig. 1 Bezug genommen.

Dargestellt ist eine Dichtung 1 für Hochtemperaturanwendungen in einer thermischen Strömungsmaschine, die zwischen zwei Bauteilen 6a, 6b der thermischen Strömungsmaschine angeordnet ist und eine Abdichtung zwischen einem Bereich mit einem hohen Druck I und einem Bereich mit einem niedrigen Druck II bewirkt. Die thermische Strömungsmaschine kann eine Turbine oder ein Verdichter sein.

Die Dichtung 1 weist einen ersten Abschnitt 3a und einen zweiten Abschnitt 3b auf. Mit dem ersten Abschnitt 3a ist die Dichtung in eine Nut 7 des ersten Bauteils 6a eingesetzt.

Der erste Abschnitt 2 und der zweite Abschnitt 3 weisen unterschiedliche mechanische Eigenschaften auf, denn der erste Abschnitt 2 weist eine höhere Elastizität als der zweite Abschnitt 3 auf. Hierzu wurde - wie später noch detailliert erläutert wird - der erste Abschnitt 2 mit einem ersten Druck druckbehandelt und der zweite Abschnitt 3 mit einem zweiten Druck druckbehandelt, der kleiner als der erste Druck ist. Der zweite Druck ist dabei im vorliegenden Ausführungsbeispiel der Atmosphärendruck.

Ferner ist im vorliegenden Ausführungsbeispiel der zweite Abschnitt 3 mit einer mechanischen Spannung beaufschlagt, derart, dass der zweite Abschnitt 3 wie in Fig. 1 dargestellt in Richtung zum Bereich mit dem hohen Druck I weisend verformt ist.

Es wird zusätzlich auf Fig. 2 Bezug genommen.

Die in Fig. 2 dargestellte Dichtung 1 unterscheidet sich von dem in Fig. 1 dargestellten Ausführungsbeispiel dadurch, dass die Dichtung 1 zwei zweite Abschnitte 3a, 3b aufweist. Dabei ist der erste Abschnitt 2 zwischen den beiden zweiten Abschnitten 3a, 3b angeordnet.

Somit erstreckt sich ein zweiter Abschnitt 3b ausgehend vom ersten Abschnitt 2 in eine erste Richtung, während sich der andere zweite Abschnitt 3b in ein zweite, zur ersten Richtung entgegengesetzten, Richtung erstreckt.

Abweichend von dem in den Fig. 1 und 2 dargestellten Ausführungsbeispielen kann die Dichtung 1 auch buchsenförmig ausgebildet sein.

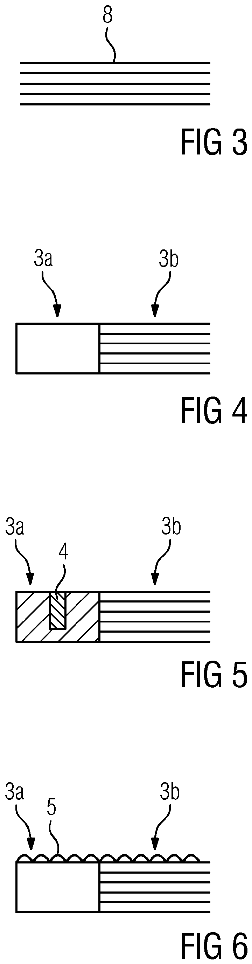

Es wird nun unter zusätzlicher Bezugnahme auf die Fig. 3 bis 6 ein Verfahren zur Herstellung der Dichtung 1 erläutert.

In einem ersten Schritt (siehe Fig. 3) wird ein Rohling 8 mit einer Mehrzahl von lagenförmig angeordneten Keramikfaser in einer Bauteilform angeordnet und dann zwischen die Keramikfasern ein Matrixmaterial eingebracht.

In einem weiteren Schritt (siehe Fig. 4) wird der Rohling 8 abschnittsweise unter Druck ausgehärtet. Hierzu wird der erste Abschnitt 3a unter Druck gesetzt, während der zweite Abschnitt 3b druckfrei bleibt. Somit weist nach diesem Arbeitsschritt der erste Abschnitt 3a eine geringere Elastizität als der zweite Abschnitt 3b auf.

In einem weiteren Schritt (siehe Fig. 5) wird in dem ersten Abschnitt 3a ein Verstärkungselement 4 eingesetzt, dass sich im vorliegenden Ausführungsbeispiel durch mehrere Lagen der Fasern erstreckt. Im vorliegenden Ausführungsbeispiel ist das Verstärkungselement 4 ein Stift, wie ein Metallstift. Abweichend vom vorliegenden Ausführungsbeispiel kann das Verstärkungselement 4 auch eine Klammer sein, die mehrere Lagen der Keramikfasern zusammenhält.

Zusätzlich oder alternativ kann in einem weiteren Schritt (siehe Fig. 6) vorgesehen sein, den ersten Abschnitt 3b mit Dichtelementen 5 zu versehen, um die Abdichtung gegenüber der Nut 7 verbessern. Dabei könne die Dichtelemente 5 an den ersten Abschnitt 3a angeformt sein, d.h. der erste Abschnitt 3a und die Dichtelemente 5 sind einstückig ausgebildet.

Ferner kann vorgesehen sein, mehrerer erste Abschnitte 2 und zweite Abschnitte 3 bandförmig aneinanderhängend herzustellen und dies dann durch Zerschneiden der zweiten Abschnitte 3 zu vereinzeln, um die Dichtungen 1 zu erhalten.

So wird eine Dichtung 1 mit zwei Abschnitten 2, 3, 3a, 3b mit unterschiedlichen mechanischen Eigenschaften bereitgestellt, die abschnittsweise an Belastungen aufgrund großer Relativbewegungen und/oder an hohe Temperaturen angepasst sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung einer Dichtung (1), insbesondere für Hochtemperaturanwendungen in thermischen Strömungsmaschinen, aus keramischen Faserverbundwerkstoff,
wobei die Dichtung (1) einen ersten Abschnitt (2) und einen zweiten Abschnitt (3, 3a, 3b) aufweist,
wobei der erste Abschnitt (2) und der zweite Abschnitt (3, 3a, 3b) unterschiedliche mechanische Eigenschaften aufweisen, wobei der erste Abschnitt (1) eine höhere Elastizität als der zweite Abschnitt (3, 3a, 3b) aufweist, und wobei der erste Abschnitt (2) mit einem ersten Druck druckbehandelt wird und der zweite Abschnitt(3, 3a, 3b) mit einem zweiten Druck druckbehandelt wird, der kleiner als der erste Druck ist.

2. Verfahren nach Anspruch 1,
wobei der erste Abschnitt (2) mit einem Verstärkungselement (4) versehen wird.

3. Verfahren nach Anspruch 1 oder 2,
wobei der erste Abschnitt (2) mit einem Dichtelement (5) versehen wird.

4. Verfahren nach Anspruche 1, 2 oder 3,
wobei die Dichtung (1) zumindest zwei zweite Abschnitte (3a, 3b) aufweisend ausgebildet wird, und der erste Abschnitt (2) zwischen den beiden zweiten Abschnitten (3a, 3b) angeordnet wird.

5. Verfahren nach einem der Ansprüche 1 bis 4,
wobei zwischen Fasern der Dichtung (1) Metallelemente angeordnet werden.

6. Verfahren nach einem der Ansprüche 1 bis 5,
wobei die Dichtung (1) buchsenförmig ausgebildet wird.

7. Dichtung (1), insbesondere für Hochtemperaturanwendungen in thermischen Strömungsmaschinen, aus keramischen Faserverbundwerkstoff, wobei die Dichtung (1) einen ersten Abschnitt (2) und einen zweiten Abschnitt (3, 3a, 3b) aufweist, wobei der erste Abschnitt (2) und der zweite Abschnitt (3, 3a, 3b) unterschiedliche mechanische Eigenschaften aufweisen, wobei der erste Abschnitt (1) eine höhere Elastizität als der zweite Abschnitt (3, 3a, 3b) aufweist, und , wobei der erste Abschnitt (2) mit einem ersten Druck druckbehandelt ist und der zweite Abschnitt(3, 3a, 3b) mit einem zweiten Druck druckbehandelt ist, der kleiner als der erste Druck ist.

8. Dichtung (1) nach Anspruch 7,
wobei der erste Abschnitt (2) ein Verstärkungselement (4) aufweist.

9. Dichtung (1) nach Anspruch 7 oder 8,
wobei der erste Abschnitt (2) ein Dichtelement (5) aufweist.

10. Dichtung (1) nach Anspruch 7, 8 oder 9,
wobei die Dichtung (1) zumindest zwei zweite Abschnitte (3a, 3b) aufweist, und der erste Abschnitt (2) zwischen den beiden zweiten Abschnitten (3a, 3b) angeordnet ist.

11. Dichtung (1) nach einem der Ansprüche 7 bis 10,
wobei zwischen Fasern der Dichtung (1) Metallelemente angeordnet sind.

12. Dichtung (1) nach einem der Ansprüche 7 bis 11,
wobei die Dichtung (1) buchsenförmig ausgebildet ist.

13. Thermische Strömungsmaschine mit einer Dichtung (1) nach einem der Ansprüche 7 bis 12.
